# EUROPÄISCHE PATENTANMELDUNG

(11) **EP 2 362 185 A2**
(43) Veröffentlichungstag der Anmeldung: **31.08.2011**
(21) Anmeldenummer: 11155970.4
(22) Anmeldetag: 25.02.2011
(51) Int. Cl.: G01C 21/32, G06F 17/30, G09B 29/10

(54) **Verfahren zum Betrieb eines Navigationssystems**

(30) Priorität: 26.02.2010 DE 102010009544
(71) Anmelder: Navigon AG, 20251 Hamburg (DE)
(72) Erfinder: Mühlfelder, Mathias, 97082, Würzburg (DE)
(74) Vertreter: von den Steinen, Axel

(57) **Zusammenfassung**

Die Erfindung betrifft ein Verfahren zum Betrieb eines Navigationssystems (1), umfassend zumindest eine Kartendatenspeichereinheit (4), eine Vielzahl von Streckenelementen digital gespeichert vorliegt, wobei jedes Streckenelement eine Vielzahl von Attributen zur Beschreibung des Streckenelements umfassen kann, zumindest eine Navigationsfunktionseinheit, insbesondere eine Routenberechnungseinheit (7) und/oder eine Kartenansichtserzeugungseinheit (8), mit der die Funktionalitäten eines Navigationssystems (1) ausgeführt werden können, eine Streckendatenempfangseinheit (10), mit der Daten betreffend zumindest ein Attribut von zumindest einem Streckenelement insbesondere kabellos empfangen werden können, eine Streckendatenbank (5), mit der Streckendaten zumindest für einen bestimmten Zeitraum, unabhängig vom Betriebszustand der Streckendatenempfangseinheit (10) und/oder dem Betriebszustand des Navigationssystems (1), gespeichert und ausgelesen werden können, umfassend die folgenden Verfahrensschritte:
a) Aktivierung zumindest einer Navigationsfunktionseinheit;
b) Auslesen von Kartendaten aus der Kartendatenspeichereinheit (4);
c) Überprüfung, ob für die Streckenelemente der ausgelesenen Kartendaten Streckendaten in der Streckendatenbank (5) gespeichert sind, die Attribute zu einem Streckenelement umfassen, die beim Ausführen der Funktionalität der Navigationsfunktionseinheit berücksichtigt werden;
d) Ausführen der Funktionalität der Navigationsfunktionseinheit, wobei die Attribute der Streckendaten vorrangig gegenüber den entsprechenden Attributen der Kartendaten für ein jeweiliges Streckenelement bei der Ausführung der Funktionalität berücksichtigt werden.

## Beschreibung

Die Erfindung betrifft ein Verfahren zum Betrieb eines Navigationssystems nach dem Oberbegriff des Anspruchs 1, welches ein besonders vorteilhaftes Aktualisieren bzw. Anpassen der Kartendaten des Navigationssystems ermöglicht.

Aus dem Stand der Technik sind Navigationssysteme und Verfahren zu deren Betrieb bekannt, bei denen verschiedene Funktionalitäten, wie beispielsweise die Erzeugung einer graphischen Kartendarstellung oder die Berechnung einer Route von einem Startpunkt zu einem Zielpunkt, auf der Basis von Kartendaten erfolgen, welche in einer Kartendatenspeichereinheit des Navigationssystems vorliegen. Durch diese Kartendaten wird ein geographisches Gebiet, insbesondere durch eine Vielzahl von Streckenelementen, digital codiert.

Um die Kartendaten der Kartendatenspeichereinheit bekannter Navigationssysteme zu aktualisieren, ist bisher der Austausch bzw. der Transfer großer Datenmengen nötig. Dies ist dem Umstand geschuldet, dass zur Aktualisierung der Kartendaten entweder alle Kartendaten ausgetauscht werden oder zumindest alle Kartendaten in einem bestimmten Gebiet des gesamten von den Kartendaten umfassten geographischen Gebiets ausgetauscht bzw. ersetzt oder überschrieben werden müssen. Beim Ersetzen eines bestimmten geographischen Gebiets werden in bekannten Verfahren zum Betrieb von Navigationssystemen bevorzugt so genannte Kacheln der Kartendaten ausgetauscht, welche die Kartendaten eines bestimmten geographischen Gebiets zusammenfassen.

Aufgrund der zur Aktualisierung der Kartendaten notwendigen großen Datenmengen kann in bekannten Verfahren die Aktualisierung nur mittels Übertragungswegen erfolgen, welche die Übertragung großer Datenmengen ermöglichen. Bevorzugt wird dazu eine physikalische Verbindung zwischen dem Navigationssystem bzw. zwischen dem Kartendatenspeicher des Navigationssystems und einem Computer hergestellt. Dadurch wird die Aktualisierung der Kartendaten umständlich und dementsprechend vom Benutzer nicht oder nicht oft genug ausgeführt.

Weiter nachteilig an den bekannten Verfahren ist es, dass aktualisierte Kartendaten nur zyklisch zur Verfügung gestellt werden, wobei die Zyklusdauer zwischen drei und sechs Monaten schwankt. Damit wird es jedoch unmöglich, Änderungen in den Kartendaten abzubilden, die eine kürzere Lebensdauer als der Aktualisierungszyklus der Kartendaten aufweisen. Beispielsweise gibt es bei einer dreimonatigen Aktualitätsspanne von Kartendaten keine Möglichkeit, eine Sperrung oder Teilsperrung einer Straße bzw. eines Streckenelements für einige Tage oder wenige Wochen zu berücksichtigen. Mit anderen Worten ausgedrückt bedeutet dies, dass die Kartendaten bei bekannten Aktualisierungen sehr bald ihre tatsächliche Aktualität verlieren.

Jedoch sind möglichst aktuelle Kartendaten für einen ordnungsgemäßen Betrieb des Navigationssystems bzw. für zufriedenstellende Navigationsleistungen eine überaus wichtige Voraussetzung.

Bekannte Verfahren zum Betrieb von Navigationssystemen weisen ferner die Möglichkeit auf, Informationen zu einzelnen Streckenelementen zu empfangen, diese kurzfristig zu speichern und die Eigenschaften bzw. Attribute der entsprechenden Streckenelemente bei Verwendung bzw. Verarbeitung in einer Navigationsfunktionseinheit zu beeinflussen. Die am weitesten verbreitete Plattform zum Empfang solcher Informationen bietet der Traffic Message Channel (TMC), mit dem Informationen über Verkehrsbehinderungen auf einzelnen Streckenelementen empfangen werden können. Bei der Verwendung eines entsprechenden Streckenelements für die Routenplanung wird dabei beispielsweise der Wegkostenfaktor des entsprechenden Streckenelements, der eine Maßeinheit für die Kosten zum Befahren des Streckenelements darstellt, mit einem Straffaktor kombiniert bzw. verknüpft, so dass das entsprechende Streckenelement bei der Routenberechnung gemieden wird.

Nachteilig an derartigen bekannten Verfahren ist es, dass die entsprechenden Zusatzinformationen nur für eine begrenzte Zeit zur Verfügung stehen, wobei dies bereits voraussetzt, dass ein Empfang der Zusatzinformationen derzeit möglich ist oder bis vor kurzem möglich war. Weiter ist es mit den bekannten Verfahren nur möglich, die Eigenschaften bzw. Attribute bereits vorhandener Streckenelemente zu beeinflussen. Das Einfügen neuer Streckenelemente, das Löschen vorhandener Streckenelemente und das über eine zeitweise Beeinflussung einer Eigenschaft bzw. eines Attributs hinausgehende langfristige und/oder permanente Ändern einer Eigenschaft bzw. eines Attributs ist mit den aus dem Stand der Technik bekannten Verfahren, welche nur die Übermittlung geringer Datenmengen vorsehen, nicht möglich.

Damit eignen sich die bekannten Verfahren, welche nur eine Übermittlung geringer Datenmengen vorsehen, wie beispielsweise der Empfang von Verkehrsmeldungen mittels TMC-Daten, nicht zur regelmäßigen, dauerhaften und vollständigen Aktualisierung der Kartendaten.

Ausgehend von diesem Stand der Technik ist es deshalb Aufgabe der vorliegenden Erfindung, ein neues Verfahren zum Betrieb eines Navigationssystems vorzuschlagen, welches die Aktualisierung von Kartendaten ermöglicht, wobei die Datenmenge zur Aktualisierung der Kartendaten erheblich verringert und dadurch eine schnellere und unkompliziertere Aktualisierung der Kartendaten, insbesondere automatisch und während des Betriebs des Navigationssystems, ermöglicht wird.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf der Grundüberlegung, dass die Attribute bzw. Eigenschaften eines Streckenelements, wie sie in den Kartendaten der Kartenspeichereinheit gespeichert sind, zumindest zeitweise durch Attribute ersetzt werden können, die an das Navigationssystem übertragen und dort in der Form von Streckendaten in einer Streckendatenbank gespeichert und aus dieser ausgelesen werden können. Die Streckendaten, die zumindest ein Attribut von zumindest einem Streckenelement umfassen, können dabei kabellos mittels einer Streckendatenempfangseinheit empfangen und unabhängig vom Betriebszustand der Streckendatenempfangseinheit und/oder dem Betriebszustand des Navigationssystems gespeichert und ausgelesen werden. Damit wird eine permanente Aktualisierung der Kartendaten ermöglicht, die nicht von der momentanen Empfangbarkeit von Streckendaten abhängt.

Im Einzelnen sieht das erfindungsgemäße Verfahren einen ersten Verfahrensschritt vor, welcher die Aktivierung von zumindest einer Navigationsfunktionseinheit des Navigationssystems vorsieht, zu deren Betrieb die Verwendung von Kartendaten der Kartendatenspeichereinheit vorgesehen ist. Bei der zumindest einen Navigationsfunktionseinheit handelt es sich um eine Einheit des Navigationssystems, mit der die Funktionalitäten eines Navigationssystems, wie beispielsweise das Berechnen einer Route von einem Startpunkt zu einem Zielpunkt oder das Erzeugen einer graphischen Kartendarstellung, erfolgt. Dementsprechend sind beispielhafte Navigationsfunktionseinheiten eine Routenberechnungseinheit und/oder eine Kartenansichtserzeugungseinheit. Darüber hinaus kann ein Navigationssystem, welches mit dem erfindungsgemäßen Verfahren betrieben wird, auch noch eine Vielzahl an sich bekannter Navigationsfunktionseinheiten umfassen. Beispielsweise können Navigationsfunktionseinheiten vorgesehen sein, die die Erzeugung eines graphischen Fahrspurverlaufs oder die Erzeugung von graphischen Hinweisschildern vorsehen.

In einem zweiten Verfahrensschritt ist das Auslesen von Kartendaten, insbesondere das Auslesen von Streckenelementen aus der Kartendatenspeichereinheit, vorgesehen. Die jeweils auszulesenden Kartendaten können dabei von der jeweiligen Navigationsfunktionseinheit und anderen Faktoren, wie beispielsweise der aktuellen Position des Navigationssystems, abhängen.

In einem anschließenden Verfahrensschritt findet eine Überprüfung statt, welche feststellt, ob für die aus der Kartendatenbank ausgelesenen Streckenelemente Streckendaten in der Streckendatenbank gespeichert sind, welche zumindest ein Attribut des jeweiligen Streckenelements umfassen, das beim Ausführen der Funktionalität der Navigationsfunktionseinheit berücksichtigt wird. Beim Betrieb einer Routenberechnungseinheit kann also überprüft werden, ob für ein aus der Kartendatenbank ausgelesenes Streckenelement Streckendaten in der Streckendatenbank gespeichert sind, die den Wegkostenfaktor oder ein damit in Verbindung stehendes Attribut, wie beispielsweise eine Höchstgeschwindigkeit, umfassen.

In einem abschließenden Verfahrensschritt wird dann die Funktionalität der Navigationsfunktionseinheit mittels der ausgelesenen Streckendaten und/oder Kartendaten ausgeführt, wobei die Attribute der Streckendaten vorrangig gegenüber den entsprechenden Attributen der Kartendaten für das jeweilige Streckenelement bei der Ausführung der Funktionalität berücksichtigt werden. Im vorangegangenen Beispiel eines bezüglich einer Routenberechnung ausgelesenen Streckenelements, für das entsprechende Streckendaten, die beispielsweise einen Wegkostenfaktor umfassen, in der Streckendatenbank gespeichert sind, wird der in der Streckendatenbank gespeicherte Wegkostenfaktor anstatt des in der Kartendatenspeichereinheit gespeicherten Wegkostenfaktors für die Routenberechnung berücksichtigt.

Dadurch wird es anhand des erfindungsgemäßen Verfahrens ermöglicht, die Aktualisierung von Kartendaten, insbesondere das Verändern von Streckenelementen bzw. den Attributen von Streckenelementen, das Löschen von Streckenelementen und auch das Neugenerieren bzw. Einfügen von Streckenelementen, durchzuführen, wobei dazu nur ein Mindestmaß an Daten an die Streckendatenempfangseinheit des Navigationssystems übermittelt und in der Streckendatenbank gespeichert werden muss. Dementsprechend ist das erfindungsgemäße Verfahren und damit die Aktualisierung der Kartendaten ohne Weiteres automatisch und während des Betriebs des Navigationssystems möglich. Dabei sind die jeweiligen Aktualisierungen immer so lange gültig bzw. aktuell, bis die entsprechenden gespeicherten Streckendaten ergänzt, gelöscht oder erneut verändert werden.

Als besonders vorteilhaft hat sich erwiesen, die Streckendaten bzw. die mit als Streckendaten übermittelten Attribute von Streckenelementen so auszugestalten, dass mit ihnen eine selektive Aktualisierung der Kartendaten bezüglich einzelner Navigationsfunktionseinheiten ermöglicht wird. Beispielsweise kann es sinnvoll sein, ein Streckenelement für Mapmatchingprozesse und die Kartenansichtserzeugung des Navigationssystems zu berücksichtigen, während das gleiche Streckenelement bei der Routenberechnung nicht berücksichtigt bzw. als gesperrt berücksichtigt wird. Dabei ist es grundsätzlich beliebig, ob die selektive Beeinflussung bzw. Aktualisierung dabei explizit oder implizit erfolgt. Bei Attributen, die nur für die Funktionalität einer Navigationsfunktionseinrichtung verwendet bzw. bei deren Betrieb berücksichtigt werden, genügt es, bei der Übermittlung der Streckendaten das jeweilige Attribut zu übersenden. Andererseits kann es für Attribute, die von mehr als einer Navigationsfunktionseinrichtung berücksichtigt werden, für eine selektive Aktualisierung vorteilhaft sein, wenn die Streckendaten so ausgestaltet sind, dass neben dem mehrfach verwendbaren Attribut auch Informationen in den Streckendaten enthalten sind, für welche Navigationsfunktionseinheiten die Attribute bzw. das Attribut der Streckendaten verwendet bzw. berücksichtigt werden soll(en).

Wie bereits erwähnt ist vorgesehen, dass bei dem erfindungsgemäßen Verfahren mittels der Attribute der Streckendaten eines Streckenelements die Berücksichtigung des Streckenelements für die Routenberechnung mittels der Routenberechnungseinheit beeinflusst werden kann. Dabei ist besonders hervorhebenswert, dass es sich bei der Beeinflussung nicht um eine Änderung bzw. Anpassung des in den Kartendaten gespeicherten Attributs eines Streckenelements handelt, sondern dass das entsprechende Attribut der Streckendaten das Attribut der Kartendaten bezüglich der Routenberechnung der Routenberechnungseinheit ersetzt bzw. verdrängt. Erst dadurch wird eine selektive tatsächliche Veränderung bzw. Aktualisierung der Kartendaten möglich.

Gemäß einer weiteren Ausführungsform ist vorgesehen, dass mittels der Attribute der Streckendaten eines Streckenelements die Berücksichtigung des Streckenelements für die Erzeugung einer graphischen Kartendarstellung mittels der Kartenansichtserzeugungseinheit beeinflusst werden kann. Auch hier ist vorgesehen, dass die Attribute der Streckendaten bei der Erzeugung einer graphischen Kartendarstellung die Attribute der Kartendaten ersetzen bzw. verdrängen. Gleiches gilt für Mapmatching mittels einer Mapmatchingeinheit. Besonders vorteilhaft ist, wie bereits erwähnt, die Tatsache, dass die Streckendaten eine differenzierte Aktualisierung der Kartendaten für unterschiedliche Navigationsfunktionseinheiten des Navigationssystems zulassen.

Dies ermöglicht es beispielsweise, dass nach dem tatsächlichen Ausbau eines realen Streckenelements Streckendaten in der Streckendatenbank hinterlegt werden, deren Attribute beispielsweise eine geänderte Anzahl an Fahrspuren gegenüber den Attributen der Kartendatenbank ausweisen bzw. anzeigen. Zudem kann jedoch auch eine beliebige Anzahl weiterer mit dem Ausbau des entsprechenden Streckenelements in Verbindung stehender Attribute mittels Streckendaten an das Navigationssystem übermittelt und in der Streckendatenbank gespeichert werden, die eine angepasste bzw. aktualisierte Darstellung des entsprechenden realen Streckenelements bei der Erzeugung einer graphischen Kartendarstellung verursachen. Dies kann sogar so weit führen, dass mittels der gespeicherten Streckendaten der geographische Verlauf eines Streckenelements, beispielsweise im Zusammenhang mit Umbauarbeiten, verändert und nach Empfang der entsprechenden Streckendaten bei der Erzeugung von Kartendarstellungen realitätsgetreu abgebildet wird. Dabei können zur Abbildung des Streckenverlaufs grundsätzlich bekannte Georeferenzierungsverfahren zum Einsatz kommen.

Besonders günstig für eine ökonomische Aktualisierung der Kartendaten bezüglich der Datenmenge und außerdem vorteilhaft für die Abbildung von Veränderungen im Straßen- bzw. Streckennetz ist es, wenn mittels der Streckendaten, die an das Navigationssystem übertragen und dort in der Streckendatenbank gespeichert werden, zumindest ein Attribut für alle Streckenelemente in einem bestimmten geographischen Bereich, insbesondere in einem geographischen Polygon, selektiv für die Verwendung in zumindest einer Navigationsfunktionseinheit beeinflusst werden kann. Somit lassen sich beispielsweise Umweltzonen in die Kartendaten einpflegen, wobei die entsprechenden Streckendaten die Attribute umfassen oder beschreiben, die verändert werden sollen, sowie Informationen bezüglich des geographischen Gebiets, für das die Aktualisierung erfolgen soll. Insbesondere in städtischen Gebieten mit einer relativ hohen räumlichen Dichte des Straßen- bzw. Streckennetzes kann so eine Aktualisierung der Kartendaten mit einer äußerst geringen Datenmenge bewerkstelligt werden. Auch bei der Bestimmung des jeweiligen geographischen Gebiets können bekannte Georeferenzierungsverfahren zum Einsatz kommen.

Da es sich bei den Veränderungen im Straßennetz bzw. im Streckennetz, welche eine Aktualisierung der Kartendaten nötig machen, in einer Vielzahl der Fälle nicht um grundlegende Änderungen eines Attributs eines Streckenelements handelt, sondern vielmehr um eine partielle Einschränkung oder Beschränkung, der damit keine globale Vorrangigkeit gegenüber dem entsprechenden Attribut der Kartendaten zugeordnet werden soll, sieht eine vorteilhafte Ausgestaltung des erfindungsgemäßen Verfahrens vor, dass die Vorrangigkeit der Attribute der Streckendaten gegenüber den Attributen der Kartendaten für ein Streckenelement von zumindest einem Vorrangmarker abhängen kann, wobei der Vorrangmarker mit den Streckendaten an das Navigationssystem übertragen, von diesem empfangen und in der Streckendatenbank gespeichert bzw. aus dieser ausgelesen werden kann.

Damit wird derartigen Veränderungen in dem Straßen- bzw. Streckennetz Rechnung getragen, in denen bisher beispielsweise eine ganztägige Geschwindigkeitsbegrenzung für ein Streckenelement vorgesehen war und nunmehr beispielsweise eine zusätzliche Geschwindigkeitsbegrenzung für die Nacht- bzw. Morgenstunden vorgesehen ist. Dementsprechend kann vorgesehen sein, dass für die übermittelten und gespeicherten Streckendaten neben dem Attribut, welches die neue bzw. zusätzliche Geschwindigkeitsbegrenzung beschreibt bzw. umfasst, auch ein entsprechender Vorrangmarker übermittelt und gespeichert werden kann, anhand dessen festgestellt werden kann, ob das ursprüngliche, in den Kartendaten gespeicherte Attribut oder das in den Streckendaten gespeicherte Attribut beim Betrieb der jeweiligen Navigationsfunktionseinheit berücksichtigt werden soll.

Alternativ kann ein zeitabhängiger Vorrang zumindest eines Attributs der Streckendaten gegenüber dem entsprechenden Attribut der Kartendaten auch dann zum Einsatz kommen, wenn eine Veränderung bzw. Beeinträchtigung zumindest eines Streckenelements zu einem bestimmten Zeitpunkt in der Zukunft auftritt und/oder wegfällt. Es kann also vorgesehen sein, dass Streckendaten beispielsweise eine zukünftige, absehbare Veränderung eines Streckenelements mittels Streckendaten in der Streckendatenbank hinterlegen, wobei mittels eines Vorrangmarkers der Vorrang der Streckendaten erst ab einem zukünftigen Zeitpunkt in Kraft tritt. Analog kann mittels eines Vorrangmarkers auch ein zeitliches Ende einer vorrangigen Berücksichtigung der Attribute der Streckendaten realisiert werden. Somit lässt sich also beispielsweise die Sperrung zumindest eines bestimmten Streckenelements für die Routenberechnung in Folge von Bauarbeiten für einen beispielsweise zweitägigen Zeitraum in den Kartendaten bzw. in den Streckendaten abbilden. Eine Aufhebung einer Sperrung und deren entsprechende Folgen für aktualisierte Kartendaten eines Navigationssystems ab einem bestimmten Datum bzw. Zeitpunkt ist demnach ebenfalls möglich.

In Anlehnung an das vorhergehende Beispiel sieht eine besonders vorteilhafte Ausgestaltung des Verfahrens vor, dass mittels eines Vorrangmarkers ein zeitabhängiger, insbesondere wochentags- und/oder tageszeitabhängiger, Vorrang der Attribute der Streckendaten gegenüber den Attributen der Kartendaten für zumindest ein Streckenelement festgelegt wird. Diese Ausgestaltung kann die Datenmenge, welche zur Aktualisierung der Kartendaten benötigt wird, weiter reduzieren, da durchaus komplexe Änderungen in den Streckenelementen einfach anhand von beispielsweise einem Attribut und einem Vorrangmarker abgebildet werden können.

Abgesehen davon betreffen Aktualisierungen der Kartendaten in einer Vielzahl der Fälle eine Veränderung der Befahrbarkeit bzw. der Vorschriften für die Befahrung in Abhängigkeit des jeweiligen Fahrzeugs bzw. in Abhängigkeit des jeweiligen Fahrzeugtyps. Dabei kann es sich beispielsweise um ein Nachtfahrverbot für LKWs auf einem Streckenelement handeln. Ein weiteres Beispiel für die Verwendung eines fahrzeugtypabhängigen Vorrangmarkers in den Streckendaten kann beispielsweise in der Freigabe einer Fußgängerzone für Lieferverkehr zu bestimmten Tageszeiten bestehen. Schließlich können sich aber beispielsweise auch in einem bestimmten geographischen Gebiet die Vorschriften für die Befahrung in Abhängigkeit des jeweiligen Fahrzeugs ändern, wie beispielsweise bei der Einführung einer städtischen Umweltzone, in die ganzjährig oder zu bestimmten Zeiten nur noch Fahrzeuge einfahren dürfen, die bestimmte Abgasnormen erfüllen.

Für die letztgenannten geographischen Gebiete kann dabei vorgesehen sein, dass der fahrzeug- oder fahrzeugtypabhängige Vorrangmarker der Streckendaten einheitlich für das gesamte geographische Gebiet gilt. Dazu kann, wie bereits beschrieben, vorgesehen sein, dass neben zumindest einem Attribut und einem Datensatz, der das geographische Gebiet beschreibt, ein Vorrangmarker in Form von Streckendaten an das Navigationssystem übersandt und in dessen Streckendatenbank gespeichert werden kann.

Um diese Aktualisierungen möglichst einfach abbilden bzw. berücksichtigen zu können, sieht eine vorteilhafte Ausführung des erfindungsgemäßen Verfahrens vor, dass mittels eines Vorrangmarkers ein fahrzeugabhängiger und/oder fahrzeugtypabhängiger Vorrang der Attribute der Streckendaten gegenüber den Attributen der Kartendaten für ein oder mehrere Streckenelemente festgelegt wird.

Da bei der Veränderung im Straßennetz bzw. im Streckennetz zumeist Änderungen vorgenommen werden, die sich in einer Vielzahl von Attributen eines Streckenelements widerspiegeln, wobei mitunter einige Attribute eine globale Änderung und andere Attribute nur eine eingeschränkte oder partielle Änderung widerspiegeln sollen, ist es besonders vorteilhaft für das erfindungsgemäße Verfahren, wenn ein Vorrangmarker für ein Attribut eines Streckenelements der Streckendaten festgelegt wird. Damit können Veränderungen bzw. Aktualisierungen möglichst genau und im Detail abgebildet und es kann ein höchstmögliches Maß an Aktualität der Kartendaten erreicht werden. Damit einher geht durch die gestiegene Anzahl der zu übermittelnden und zu speichernden Vorrangmarker jedoch auch eine gesteigerte zur Aktualisierung benötigte Datenmenge.

Um neben oder zusätzlich zu einer möglichst genauen Aktualisierung der Kartendaten auch eine datenökonomische Aktualisierung zu gewährleisten, sieht eine weitere Ausgestaltung des erfindungsgemäßen Verfahrens vor, dass ein Vorrangmarker für alle Attribute eines Streckenelements der Streckendaten festgelegt wird. Dies bietet sich insbesondere für das Entfernen eines Streckenelements oder für das Hinzufügen eines Streckenelements in die Kartendaten bzw. aus den Kartendaten an. Demnach kann für ein Streckenelement, welches beispielsweise durch Sperrung und/oder durch Abriss von der Routenberechnung und der Kartendarstellung sowie allen anderen Navigationsfunktionalitäten ausgeschlossen werden soll, ein gemeinsamer Vorrangmarker für alle Attribute in den Streckendaten vorgesehen sein, der das Entfernen des entsprechenden Streckenelements ab einem bestimmten Zeitpunkt vorsieht und dementsprechend für alle Attribute eines Streckenelements in den Streckendaten gespeichert wird. Dadurch können insbesondere Veränderungen im Straßenverlauf bzw. Streckenverlauf, welche ein gesamtes Streckenelement als solches betreffen, mit einem Mindestmaß an zu übertragenden und zu speichernden Daten erfolgen.

Weiter kann vorgesehen sein, dass die Streckendaten von einer zentralen Streckendatensendeeinheit an die Streckendatenempfangseinheit des Navigationssystems übertragen werden. Um die zu übertragende Datenmenge weiter zu reduzieren, kann dabei vorgesehen sein, dass vor der Übertragung von der Streckendatensendeeinheit an die Streckendatenempfangseinheit des Navigationssystems vom Navigationssystem der Zeitpunkt des letzten Empfangs von Streckendaten von der Streckendatensendeeinheit an diese gesendet wird. Durch ein entsprechendes Ausfiltern bereits gesendeter Streckendaten seitens der zentralen Streckendatensendeeinheit vor der Übertragung an die Streckendatenempfangseinheit des Navigationssystems kann dadurch ein redundantes Übertragen bereits vom Navigationssystem empfangener und gespeicherter Streckendaten vermieden werden. Die Übertragungstechnik, die zur Übertragung der Streckendaten genutzt wird, ist grundsätzlich beliebig. Vorteilhaft können aber Standards wie RDS, GPRS, UMTS, HSDPA, WLAN oder WIMAX zur Übertragung verwendet werden.

Um die Gesamtheit der Aktualisierungen bzw. neu empfangenen und gespeicherten Streckendaten dem Benutzer mitzuteilen, kann vorgesehen sein, dass in der Streckendatenbank gespeicherte Streckendaten auf einer Ausgabeeinheit des Navigationssystems ausgegeben werden können. Dabei kann vorgesehen sein, dass die entsprechenden Streckendaten graphisch so aufgearbeitet werden können, dass die Aktualisierungen der Kartendaten für den Benutzer leicht erfassbar bzw. nachvollziehbar sind. Dabei ist es grundsätzlich beliebig, ob alle gespeicherten bzw. nur die zuletzt gespeicherten oder nur ein Teil der zuvor genannten Streckendaten auf einer Ausgabeeinheit ausgegeben werden. Eine Entscheidung diesbezüglich wird vom Fachmann jedoch so gefällt werden, dass der Benutzer der Ausgabe einen möglichst hohen Informationsgehalt entnehmen kann, ohne dabei überfordert und/oder verwirrt zu werden.

In machen Fällen kann es vorkommen, dass trotz regelmäßiger Aktualisierungen der Kartendaten mittels des Empfangs von Streckendaten über die Streckendatenempfangseinheit die Kartendaten bzw. die Streckendaten nicht dem aktuellen Stand entsprechen. Deshalb sieht eine vorteilhafte Ausgestaltung des erfindungsgemäßen Verfahrens vor, dass Streckendaten über eine Eingabeeinheit des Navigationssystems erstellt und in der Streckendatenbank gespeichert werden können. Somit ist der Benutzer nicht auf die empfangenen Streckendaten alleine angewiesen, sondern kann auch selbst, bevorzugt über eine entsprechende graphische Benutzeroberfläche im Zusammenspiel mit einer Eingabeeinheit, Streckendaten erstellen und speichern.

In einer weiteren vorteilhaften Ausgestaltung ist vorgesehen, dass in der Streckendatenbank gespeicherte Streckendaten über eine Eingabeeinheit des Navigationssystems geändert werden können und im geänderten Zustand in der Streckendatenbank gespeichert werden können. Dies ist insbesondere dann sinnvoll, wenn Streckendaten, die eine zeitweilige bzw. zeitlich begrenzte Veränderung bewirken sollen oder bewirkt haben, gemäß der Streckendaten noch aktuell sind, wenn die tatsächliche Veränderung bereits aufgehoben bzw. rückgängig gemacht worden ist oder umgekehrt eine Veränderung als bereits aufgehoben bzw. rückgängig angenommen wird, die aber in Wirklichkeit noch besteht. In diesen Fällen kann durch die Veränderung der Streckendaten durch den Benutzer eine an die tatsächliche Realität angepasste Aktualisierung der Streckendaten erfolgen. Dabei kann ebenfalls vorgesehen werden, dass nur bestimmte Streckendaten über eine Eingabe geändert und im geänderten Zustand gespeichert werden können.

Neben einer unidirektionalen Kommunikation, welche lediglich eine beispielsweise zentralseitige Versendung von Streckendaten und den Empfang von Streckendaten durch eine Streckendatenempfangseinheit des Navigationssystems vorsieht, kann auch eine bidirektionale Kommunikation vorgesehen sein. Dabei ist es besonders vorteilhaft, wenn mittels einer Eingabeeinheit erstellte und/oder geänderte Streckendaten insbesondere kabellos vom Navigationsystem an eine zentrale Streckendatenverwaltungseinheit übermittelt werden können. Dadurch wird es ermöglicht, dass Streckendaten, die von einem Benutzer über eine Eingabeeinheit erstellt bzw. geändert werden, nach der Übertragung an die zentrale Streckendatenverwaltungseinheit dort überprüft, bewertet und mit Streckendaten, die die zentrale Streckendatenverwaltungseinheit von anderen Navigationssystemen übermittelt bekommt, verglichen werden und daraufhin gegebenenfalls an eine zentrale Streckendatensendeeinheit weitergeleitet und von dort aus wiederum an eine Vielzahl von Navigationssystemen übertragen werden.

Dadurch wird es ermöglicht, dass neben den Informationen über Änderungen im Straßen- bzw. Streckennetz, die beispielsweise von der öffentlichen Hand bekanntgegeben werden, auch der Benutzer über die Erstellung und Übermittlung von Streckendaten an eine zentrale Streckendatenverwaltungseinheit an der Aktualisierung der Kartendaten mitwirken kann.

Eine weitere, vorteilhafte Ausführungsform des erfindungsgemäßen Verfahrens betrifft insbesondere das Erstellen bzw. das Freigeben von Streckenelementen, die zu dem Zeitpunkt, zu dem die Kartendaten erzeugt bzw. bereitgestellt werden, bereits absehbar, jedoch nicht fertig gestellt bzw. befahrbar oder zumindest nicht in vollem Umfang befahrbar sind. Für derartige Streckenelemente ist es besonders vorteilhaft, wenn in den Kartendaten bereits ein Verweis auf das Vorhandensein von Streckendaten zu diesem Streckenelement in der Streckendatenbank enthalten sein kann. Dadurch wird einerseits die Überprüfung erleichtert und beschleunigt, welche überprüft, ob zu einem bestimmten Streckenelement der Kartendaten Streckendaten in der Streckendatenbank vorhanden sind. Zudem können dadurch Streckenelemente, welche zunächst nicht für Navigationsfunktionseinheiten berücksichtigt werden sollen, trotzdem bereits in den Kartendaten der Kartendatenspeichereinheit verankert, also gespeichert werden, wobei mittels des Verweises auf das Vorhandensein von Streckendaten die Freigabe bzw. das Berücksichtigen der jeweiligen Streckenelemente über eine Aktualisierung der jeweiligen Streckendaten erfolgen kann.

Es kann also beispielsweise vorgesehen sein, dass ein im Bau befindlicher Autobahnabschnitt bzw. ein oder mehrere Autobahnstreckenelemente bei der Erstellung der Kartendaten bereits miterstellt werden und mit einem Verweis auf das Vorhandensein von Streckendaten versehen werden. Um eine Berücksichtigung des entsprechenden Streckenelements bzw. der entsprechenden Streckenelemente zu ermöglichen, müssen nach der Fertigstellung lediglich entsprechende Streckendaten an das Navigationssystem übertragen werden, die daraufhin das Benutzen bzw. die Freigabe des Streckenelements ermöglichen.

Im Folgenden wird die Erfindung anhand schematischer Zeichnungen, welche lediglich Ausführungsbeispiele zeigen, näher erläutert.

Es zeigen:
- Fig. 1: eine schematisierte Darstellung des Aufbaus eines Navigationssystems, welches nach dem erfindungsgemäßen Verfahren betrieben wird;
- Fig. 2: eine schematische Darstellung einer Ausgabeeinheit eines Navigationssystems, auf der die Ausgabe von Streckendaten erfolgt;
- Fig. 3: eine alternative schematische Darstellung einer Ausgabeeinheit eines Navigationssystems, auf der die Ausgabe von Streckendaten erfolgt.

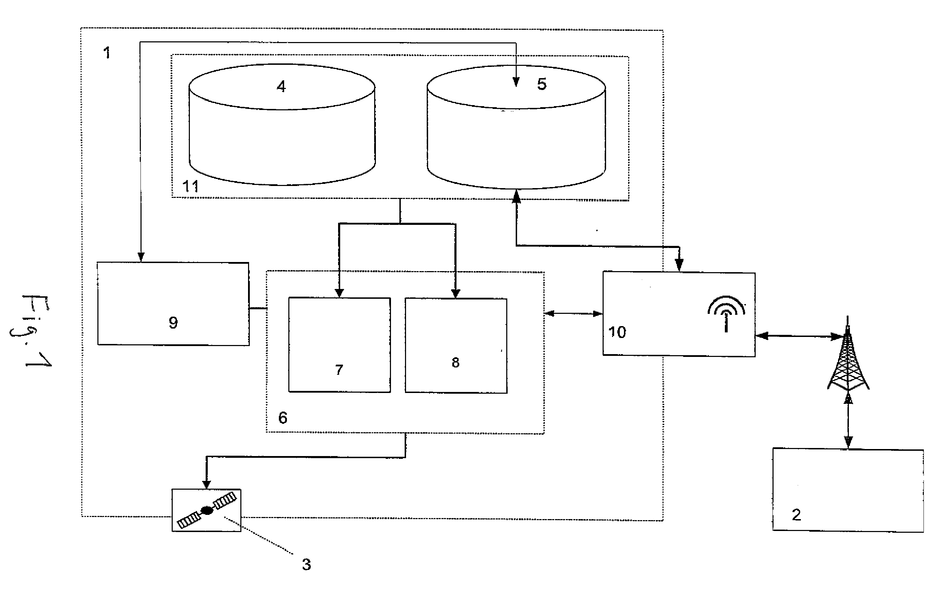

Fig. 1 zeigt ein Navigationssystem 1 und eine Streckendatensendeeinheit 2. Das Navigationssystem 1 umfasst dabei eine Positionsbestimmungseinheit 3, welche anhand von empfangenen Positionsdaten die aktuelle Position des Navigationssystems 1 bestimmen kann. Dazu können insbesondere Satellitenpositionssignale empfangen und verarbeitet werden. Aber auch eine Koppelortung oder Kombinationsverfahren wie AGPS können zum Einsatz kommen.

Weiter umfasst das Navigationssystem 1 die Kartendatenspeichereinheit 4, in der ein geographisches Gebiet durch eine Vielzahl von Streckenelementen digital gespeichert vorliegt. Weiter umfasst das Navigationssystem 1 die Streckendatenbank 5, welche zur Speicherung von Streckendaten eingerichtet ist, welche wiederum von der Streckendatensendeeinheit 2 gesendet und von der Streckendatenempfangseinheit 10 des Navigationssystems empfangen werden. Sowohl in der Kartendatenspeichereinheit 4 als auch in der Streckendatenbank 5 können die jeweiligen Daten zugriffsoptimiert hinterlegt bzw. gespeichert werden. Es kann zusätzlich möglich sein, dass die Kartendatenspeichereinheit 4 und die Streckendatenbank 5 auf einem gemeinsamen physischen Speicherelement gespeichert werden bzw. vorhanden sind.

Die Verbindung zwischen der Streckdatenempfangseinheit 2 und der Streckendatensendeeinheit 10 wird bevorzugt kabellos hergestellt. Alternativ kann das Navigationssystem auch zunächst mit einer Vorrichtung verbunden werden, die dann eine kabellose Verbindung zur Streckendatensendeeinheit 2 herstellt. Der Aktualisierungsprozess kann derart aufgebaut sein, dass die übermittelten Streckendaten eine inkrementelles bzw. transaktionsorientierte Aktualisierung der Kartendaten erlauben. Es kann jedoch auch möglich sein, alle Streckendaten der Streckendatenbank zu ersetzen bzw. zu erneuern. Dies erfolgt bevorzugt dann, wenn eine ausreichende Übertragungsbandbreite zur Verfügung steht, und kann insbesondere in Verbindung bzw. in zeitlicher Nähe mit einem Austausch der Kartendaten der Kartendatenspeichereinheit 04 erfolgen.

Zur Aktualisierung der Kartendaten bzw. zum Empfang oder zur Abfrage von Streckendaten kann vorzugsweise die Herstellung einer Verbindung zwischen der Streckdatenempfangseinheit 2 und der Streckendatensendeeinheit 10 über eine Eingabe mittels einer Eingabe- und/oder Ausgabeeinheit 9 erfolgen. Alternativ oder additiv kann auch eine regelmäßige, beispielsweise zeitgesteuerte, Aktualisierung erfolgen.

Zudem weist das Navigationssystem 1 der Fig. 1 zwei Navigationsfunktionseinheiten, die Routenberechnungseinheit 7 und die Kartenansichtserzeugungseinheit 8, auf, welche ihre jeweiligen Funktionalitäten unter Berücksichtigung der Kartendaten und/oder Streckendaten der Kartendatenspeichereinheit 4 und der Streckendatenbank 5 ausführen. Die Navigationsfunktionseinheiten in Form der Routenberechnungseinheit 7 und der Kartenansichtserzeugungseinheit 8 können zusammengefasst in Form einer zentralen Berechnungseinheit (CPU) 6 zusammengefasst sein.

Die Aktivierung einer der Navigationsfunktionseinheiten führt gemäß der beanspruchten Lehre dazu, dass für bestimmte Streckenelemente die Kartendaten der Kartendatenspeichereinheit, und, wo vorhanden, die entsprechenden Streckendaten der Streckendatenbank 5 ausgelesen und an die jeweilige Navigationsfunktionseinheiten weitergeleitet werden. Dabei ist es gemäß der Ausführungsform der Fig. 1 vorgesehen, dass die Routenberechnungseinheit 7 und die Kartenansichtserzeugungseinheit 8 nicht direkt auf die Kartendatenspeichereinheit 4 und die Streckendatenbank 5 zugreifen, sondern dass diese die Daten aus einer übergeordneten Zwischeneinrichtung 11 auslesen. Alternativ dazu kann jedoch auch ein direkter Zugriff auf die Kartendatenspeichereinheit 4 und die Streckendatenbank 5 vorgesehen sein.

Unter bevorzugter Berücksichtigung der Streckendaten der Streckendatenbank 5 werden die Funktionen der Navigationsfunktionseinheiten ausgeführt und das Resultat bzw. die Resultate gegebenenfalls über eine kombinierte Ein- und Ausgabeeinheit 9 ausgegeben. Als kombinierte Ein- und Ausgabeeinheit 9 kann bevorzugt ein berührungsempfindliches Farbdisplay verwendet werden.

Weiter ist vorgesehen, dass mittels der Ein- und Ausgabeeinheit 9 des Navigationssystems 1 Streckendaten eingegeben und in der Streckendatenbank 5 des Navigationssystems 1 gespeichert werden können. Zudem sieht eine Ausführungsform vor, dass Streckendaten aus der Streckendatenbank 5 ausgelesen und an der kombinierten Ein- und Ausgabeeinheit 9 des Navigationssystems 1 ausgegeben, verändert und gegebenenfalls in geändertem Zustand wieder in der Streckendatenbank 5 gespeichert werden können.

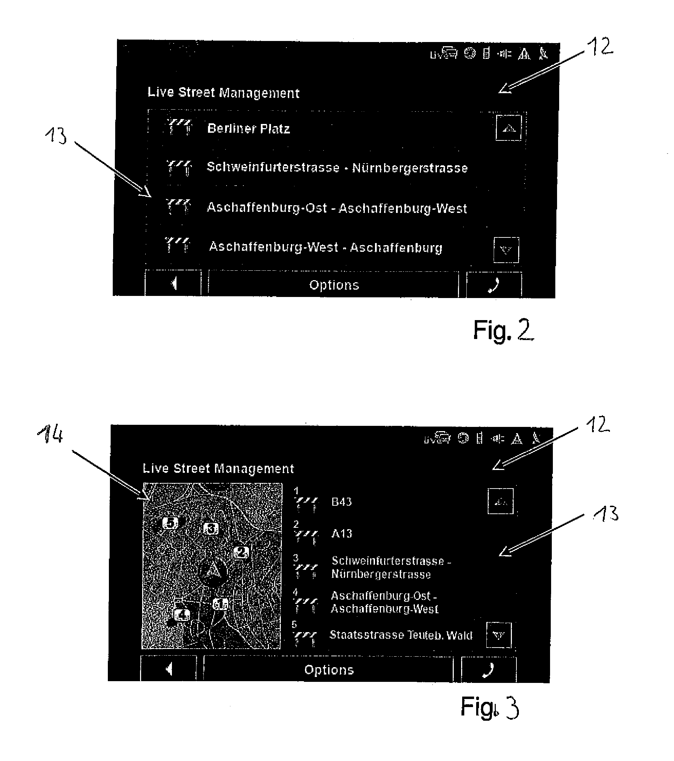

In der Fig. 2 ist beispielhaft die Ausgabe von Streckendaten auf einer Ausgabeeinheit 12 des Navigationssystems 1 dargestellt. Die Ausgabe erfolgt dabei in Form einer Liste 13, in der die einzelnen Listenelemente die Streckendaten bezüglich jeweils zumindest eines Streckenelements darstellen. Neben einer Bezeichnung des Streckenelements bzw. der Streckenelemente enthalten die Listenelemente der Liste 13 auch ein Piktogramm, welches die Art der mit den Streckendaten gespeicherten Attribute symbolisiert. Im Beispiel der Fig. 2 handelt es sich bei den Listenelementen der Liste 13 durchgängig um Sperrungen, was über das Piktogramm der Listenelemente veranschaulicht wird.

Die der Liste 13 zugrundeliegenden Streckendaten umfassen also für die angegebenen Streckenelemente zumindest ein Attribut, welches die Sperrung des entsprechenden Streckenelements bzw. der entsprechenden Streckenelemente für die Routenberechnung und/oder für die Erzeugung einer graphischen Kartendarstellung bewirkt.

Fig. 3 zeigt eine alternative Variante zur Ausgabe von Streckendaten der Streckendatenbank 5. Dabei ist auf der Ausgabeeinheit 12 des Navigationssystems 1 neben einer Liste 13, die die Streckendaten für einzelne oder mehrere Streckenelemente darstellt, auch eine Kartendarstellung 14 enthalten. Dabei sind die Listenelemente der Liste 12 nummeriert und die entsprechenden Streckenelemente auf der Kartendarstellung 14 ebenfalls anhand der Nummerierung der Liste 13 kenntlich gemacht. Die Nummerierung der einzelnen Streckenelemente in der Liste 13 und in der Kartendarstellung 14 erleichtert dabei dem Benutzer die Zuordnung.

Vorzugsweise kann in einer der Listen 13 der Fig. 2 und 3 und/oder in der Kartendarstellung 14 der Fig. 3 eine Auswahl der einzelnen Listenelemente bzw. Streckenelemente vorgesehen sein, die es dem Nutzer erlaubt, die Details der jeweiligen Streckendaten abzurufen bzw. anzuzeigen und gegebenenfalls zu ändern und im geänderten Zustand in der Streckendatenbank zu speichern.

Bei der Anzeige von Details von Streckendaten, wie beispielsweise denjenigen der Listen 13, können bevorzugt die Gültigkeitsdauer oder andere relevante Informationen angezeigt bzw. ausgegeben werden.

Im Fall einer Änderung ist es besonders vorteilhaft, wenn in den Streckendaten eine Änderung durch den Benutzer kenntlich bzw. nachvollziehbar gemacht wird. Gleiches gilt auch, wenn Streckendaten mittels einer Eingabeeinheit von einem Benutzer erstellt werden. Das Kenntlichmachen einer nutzerseitigen Änderung von Streckendaten kann nach der Übermittlung an eine zentrale Streckendatenverwaltungseinheit und einer dortigen Überprüfung entfernt werden. Damit werden also von einem Nutzer geänderte Streckendaten nach der Überprüfung und Feststellung einer allgemeinen Gültigkeit der Änderung zu allgemeinen Streckendaten. Anschließend können die überprüften Streckendaten gegebenenfalls an eine zentrale Streckendatensendeeinheit 2 übertragen und von dieser an eine Vielzahl von Navigationssystemen gesendet werden.

Alternativ kann die Ausgabe der Fig. 2 und 3 aber auch jeweils nach dem Empfang neuer Streckendaten mittels der Streckendatenempfangseinheit 10 erfolgen, wobei der Benutzer über die Ausgabe auf der Ausgabeeinheit 12 die Möglichkeit hat, zu bestimmen, ob, und wenn ja welche der neu empfangenen Streckendaten in der Streckendatenbank 5 gespeichert werden.

## Patentansprüche

1. Verfahren zum Betrieb eines Navigationssystems (1), umfassend zumindest eine Kartendatenspeichereinheit (4), in der ein geographisches Gebiet durch eine Vielzahl von Streckenelementen digital gespeichert vorliegt, wobei jedes Streckenelement eine Vielzahl von Attributen zur Beschreibung des Streckenelements umfassen kann, zumindest eine Navigationsfunktionseinheit, insbesondere eine Routenberechnungseinheit (7) und/oder eine Kartenansichtserzeugungseinheit (8), mit der die Funktionalitäten eines Navigationssystems (1) ausgeführt werden können, eine Streckendatenempfangseinheit (10), mit der Daten betreffend zumindest ein Attribut von zumindest einem Streckenelement insbesondere kabellos empfangen werden können, eine Streckendatenbank (5), mit der Streckendaten zumindest für einen bestimmten Zeitraum, unabhängig vom Betriebszustand der Streckendatenempfangseinheit (10) und/oder dem Betriebszustand des Navigationssystems (1), gespeichert und ausgelesen werden können, umfassend die folgenden Verfahrensschritte:
a) Aktivierung zumindest einer Navigationsfunktionseinheit, zu deren Betrieb die Verwendung von Kartendaten der Kartendatenspeichereinheit (4) vorgesehen ist;
b) Auslesen von Kartendaten, insbesondere Streckenelementen, aus der Kartendatenspeichereinheit (4);
c) Überprüfung, ob für die Streckenelemente der ausgelesenen Kartendaten Streckendaten in der Streckendatenbank (5) gespeichert sind, die Attribute zu einem Streckenelement umfassen, die beim Ausführen der Funktionalität der Navigationsfunktionseinheit berücksichtigt werden;
d) Ausführen der Funktionalität der Navigationsfunktionseinheit mittels der ausgelesenen Streckendaten und/oder Kartendaten, wobei die Attribute der Streckendaten vorrangig gegenüber den entsprechenden Attributen der Kartendaten für ein jeweiliges Streckenelement bei der Ausführung der Funktionalität berücksichtigt werden.

2. Verfahren nach Anspruch 1,
**dadurch gekennzeichnet,**
**dass** mittels der Attribute der Streckendaten eines Streckenelements die Eigenschaften des Streckenelements selektiv für die Funktionalität von zumindest einer Navigationsfunktionseinheit beeinflusst werden können.

3. Verfahren nach Anspruch 1 oder 2,
**dadurch gekennzeichnet,**
**dass** mittels der Attribute der Streckendaten eines Streckenelements die Berücksichtigung des Streckenelements für die Erzeugung einer graphischen Kartendarstellung mittels der Kartenansichtserzeugungseinheit (8) und/oder für die Routenberechnung mittels der Routenberechnungseinheit (7) und/oder für das Mapmatching mittels einer Mapmatchingeinheit beeinflusst werden kann.

4. Verfahren nach einem der Ansprüche 1 bis 3,
**dadurch gekennzeichnet,**
**dass** mittels der Streckendaten zumindest ein Attribut aller Streckenelemente in einem geographischen Gebiet, insbesondere innerhalb eines geographischen Polygons, beeinflusst werden kann.

5. Verfahren nach einem der Ansprüche 1 bis 4,
**dadurch gekennzeichnet,**
**dass** die Vorrangigkeit der Attribute der Streckendaten gegenüber den Attributen der Kartendaten für ein Streckenelement von zumindest einem Vorrangmarker, welcher Teil der Streckendaten ist, abhängt.

6. Verfahren nach Anspruch 5,
**dadurch gekennzeichnet,**
**dass** mittels eines Vorrangmarkers ein zeitabhängiger, insbesondere wochentags- und/oder tageszeitabhängiger, Vorrang der Attribute der Streckendaten gegenüber den Attributen der Kartendaten für ein Streckenelement festgelegt wird.

7. Verfahren nach Anspruch 5 oder 6,
**dadurch gekennzeichnet,**
**dass** mittels eines Vorrangmarkers ein fahrzeugabhängiger und/oder fahrzeugtypabhängiger Vorrang der Attribute der Streckendaten gegenüber den Attributen der Kartendaten für ein Streckenelement festgelegt wird.

8. Verfahren nach einem der Ansprüche 5 bis 7,
**dadurch gekennzeichnet,**
**dass** ein Vorrangmarker für ein Attribut der Streckendaten eines Streckenelements festgelegt wird.

9. Verfahren nach einem der Ansprüche 5 bis 8,
**dadurch gekennzeichnet,**
**dass** ein Vorrangmarker für alle Attribute der Streckendaten eines Streckenelements festgelegt wird.

10. Verfahren nach einem der Ansprüche 1 bis 9,
**dadurch gekennzeichnet,**
**dass** Streckendaten von einer zentralen Streckendatensendeinheit (2) an die Streckendatenempfangseinheit (10) des Navigationssystems (1) übertragen werden.

11. Verfahren nach einem der Ansprüche 1 bis 10,
**dadurch gekennzeichnet,**
**dass** in der Streckendatenbank (5) gespeicherte Streckendaten auf einer Ausgabeeinheit (12) des Navigationssystems (1) ausgegeben werden können.

12. Verfahren nach einem der Ansprüche 1 bis 11,
**dadurch gekennzeichnet,**
**dass** Streckendaten über eine Eingabeeinheit (9) des Navigationssystems (1) erstellt und in der Streckendatenbank (5) gespeichert werden können.

13. Verfahren nach einem der Ansprüche 1 bis 12,
**dadurch gekennzeichnet,**
**dass** in der Streckendatenbank (5) gespeicherte Streckendaten über eine Eingabeeinheit (9) des Navigationssystem (1) geändert werden können und im geänderten Zustand in der Streckendatenbank (5) gespeichert werden können.

14. Verfahren nach einem der Ansprüche 1 bis 13,
**dadurch gekennzeichnet,**
**dass** mittels der Eingabeeinheit (9) erstellte und/oder geänderte Streckendaten insbesondere kabellos an eine zentrale Streckendatenverwaltungseinheit übermittelt werden können.

15. Verfahren nach einem der Ansprüche 1 bis 14,
**dadurch gekennzeichnet,**
**dass** in den Kartendaten der Kartendatenspeichereinheit (4) ein Verweis auf das Vorhandensein von Streckendaten zu einem bestimmten Streckenelement enthalten sein kann.
